(19)

Europäisches
Patentamt
European
Patent Office
Office européen
des brevets

(11) **EP 1 868 388 A2**

(12) **EUROPEAN PATENT APPLICATION**

(43) Date of publication:
**19.12.2007 Bulletin 2007/51**

(51) Int Cl.:
*H04N 7/26* (2006.01)   *H04N 7/50* (2006.01)

(21) Application number: **06027032.9**

(22) Date of filing: **28.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **13.06.2006  US 451850**

(71) Applicant: **Broadcom Corporation**
**Irvine, CA 92617 (US)**

(72) Inventor: **Chen, Xuemin (Sherman)**
**San Diego, CA 92129 (US)**

(74) Representative: **Jehle, Volker Armin**
**Bosch Graf von Stosch Jehle**
**Patentanwaltsgesellschaft mbH**
**Flüggenstrasse 13**
**80639 München (DE)**

(54) **Iterative video compression**

(57)   Certain aspects of a method and system for video compression using an iterative encoding algorithm are disclosed. Aspects of a method may include modifying dynamically, a coding rate of at least a portion of received video data based on at least one quantized vector, during bit rate compression of the received video data. At least one of the quantized vectors may be adaptively selected and transmitted to a decoder via a compressed bit stream.

**FIG. 3**

**Description**

CROSS-REFERENCE TO RELATED APPLICATIONS/INCORPORATION BY REFERENCE

This application is related to the following applications, each of which is incorporated herein by reference in its entirety for all purposes:

United States Patent Application Serial No. 10/963,680 (Attorney Docket No. 15762US02) filed October 13, 2004;

United States Patent Application Serial No. 11/000,731 (Attorney Docket No. 15748US02) filed December 1, 2004; and

United States Patent Application Serial No. 10/963,677 (Attorney Docket No. 15748US02) filed October 13, 2004.

Each of the above stated applications is hereby incorporated herein by reference in its entirety.

FIELD OF THE INVENTION

Certain embodiments of the invention relate to encryption of video data. More specifically, certain embodiments of the invention relate to a method and system for video compression using an iterative encoding algorithm.

BACKGROUND OF THE INVENTION

Earlier video compression standards such as MPEG-1, MPEG-2, H.263, MPEG-4 and H.264/MPEG-4 advanced video coding (AVC) have enabled many consumer products. For instance, these standards enabled video CDs and DVDs allowing video playback on digital VCRs/set-top-boxes and computers, and digital broadcast video delivered via terrestrial, cable or satellite networks, allowing digital TV and HDTV. While MPEG-1 addressed coding of non-interlaced video at lower resolutions and bit-rates offering VHS-like video quality, MPEG-2 addressed coding of interlaced video at higher resolutions and bit-rates enabling digital TV and HDTV with commensurate video quality. H.263 addressed videoconference and video telephony applications. MPEG-4 was developed to address a new generation of multimedia applications and services. The premise behind MPEG-4 was the interactive multimedia applications and services such as interactive TV, and Internet video where access to coded audio and video objects might be needed. MPEG-4 also allows higher efficiency compression than MPEG-1 and MPEG-2. H.264/MPEG-4 AVC is a new state-of-the-art video coding standard that addresses inexhaustible demands for much higher compression to enable with as best video quality as possible, practical applications such as internet multimedia, wireless video, personal video recorders, video-on-demand, and videoconferencing.

The basic video compression structures of the video compression standards such as MPEG-1, MPEG-2, H. 263, MPEG-4 and H.264/MPEG-4 advanced video coding (AVC) are very similar. Such a structure may be commonly referred to as motion-compensated-transform coding or compression structure. Compression of video may be performed picture by picture. Each picture to be coded may be first partitioned into a number of slices. Slices are individual coding units and may be further divided into microblocks and blocks for efficient coding operations. Motion-compensation, block transform, and quantization may be applied to these coding blocks and entropy coding may be performed to various compression elements, such as motion vectors and quantized coefficients.

Further limitations and disadvantages of conventional and traditional approaches will become apparent to one of skill in the art, through comparison of such systems with some aspects of the present invention as set forth in the remainder of the present application with reference to the drawings.

BRIEF SUMMARY OF THE INVENTION

A method and/or system for video compression using an iterative encoding algorithm, substantially as shown in and/or described in connection with at least one of the figures, as set forth more completely in the claims.
According to an aspect of the invention, a method is provided for handling video data, the method comprising:

modifying dynamically, a coding rate of at least a portion of received video data based on at least one quantized vector, during compression of said received video data.

Advantageously, the method further comprises scaling said at least one quantized vector for said received video data. Advantageously, the method further comprises adjusting, during said compression, said coding rate of said received video data utilizing at least one of:

pruned tree structure codes and shortened low-density parity check (LDPC) codes.

Advantageously, the method further comprises loop filtering at least one macroblock of said received video data. Advantageously, the method further comprises:

dynamically selecting said at least one quantized vector during said compression; and
transmitting said selected said at least one quantized vector to a decoder via a compressed bit stream.

Advantageously, the method further comprises generating said compressed bit stream after said compression of said received video data.
Advantageously, the method further comprises indexing said at least one quantized vector.
Advantageously, the method further comprises sorting said at least one quantized vector.
According to an aspect of the invention, a machine-readable storage is provided having stored thereon, a computer program having at least one code section for handling video data, the at least one code section being executable by a machine for causing the machine to perform steps comprising:

modifying dynamically, a coding rate of at least a portion of received video data based on at least one quantized vector, during compression of said received video data.

Advantageously, the machine-readable storage further comprises code for scaling said at least one quantized vector for said received video data.
Advantageously, the machine-readable storage further comprises code for adjusting, during said compression, said coding rate of said received video data utilizing at least one of: pruned tree structure codes and shortened low-density parity check (LDPC) codes.
Advantageously, the machine-readable storage further comprises code for loop filtering at least one macroblock of said received video data.
Advantageously, the machine-readable storage further comprises:

code for dynamically selecting said at least one quantized vector during said compression; and
code for transmitting said selected said at least one quantized vector to a decoder via a compressed bit stream.

Advantageously, the machine-readable storage further comprises code for generating said compressed bit stream after said compression of said received video data.
Advantageously, the machine-readable storage further comprises code for indexing said at least one quantized vector.
Advantageously, the machine-readable storage further comprises code for sorting said at least one quantized vector.
According to an aspect of the invention, a system is provided for handling video data, the system comprising:

circuitry that enables dynamic modification of a coding rate of at least a portion of received video data based on at least one quantized vector, during compression of said received video data.

Advantageously, said circuitry enables scaling of said at least one quantized vector for said received video data.
Advantageously, said circuitry enables adjusting of said coding rate of said received video data during said compression, utilizing at least one of: pruned tree structure codes and shortened low-density parity check (LDPC) codes.
Advantageously, said circuitry enables loop filtering at least one macroblock of said received video data.
Advantageously, said circuitry enables:

dynamic selection of said at least one quantized vector during said compression; and

transmission of said selected said at least one quantized vector to a decoder via a compressed bit stream.

Advantageously, said circuitry enables generation of said compressed bit stream after said compression of said received video data.
Advantageously, said circuitry enables indexing of said at least one quantized vector.
Advantageously, said circuitry enables sorting of said at least one quantized vector.
These and other advantages, aspects and novel features of the present invention, as well as details of an illustrated embodiment thereof, will be more fully understood from the following description and drawings.

BRIEF DESCRIPTION OF SEVERAL VIEWS OF THE DRAWINGS

FIG. 1A is a block diagram of an exemplary video processing system, in accordance with an embodiment of the invention.

FIG. 1 B is a block diagram of an exemplary video encoder that may be utilized in connection with an embodiment of the invention.

FIG. 2 is a block diagram of an exemplary video decoder that may be utilized in connection with an embodiment of the invention.

FIG. 3 is a block diagram of an exemplary video compression encoder system, in accordance with an embodiment of the invention.

FIG. 4 is a block diagram of an exemplary video compression decoder system, in accordance with an embodiment of the invention.

FIG. 5 is a flow chart illustrating exemplary steps for a video compression system with iterative vector encoding, in accordance with an embodiment of the invention.

DETAILED DESCRIPTION OF THE INVENTION

Certain embodiments of the invention may be found in a method and system for video compression using an iterative encoding algorithm. Aspects of the method and system may comprise modifying dynamically, a coding rate of at least a portion of received video data based on at least one quantized vector, during bit rate compression of the received video data. At least one of the quantized vectors may be adaptively selected and transmitted to a decoder via a compressed bit stream.

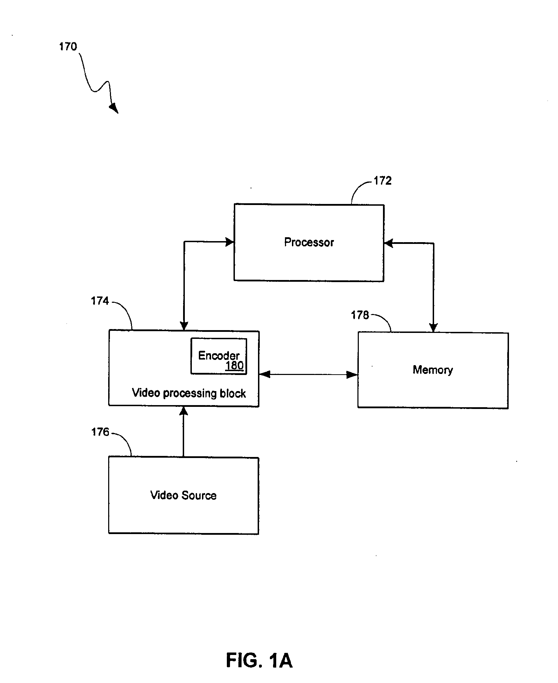

FIG. 1A is a block diagram of an exemplary video processing system, in accordance with an embodiment of the invention. Referring to FIG. 1A, the exemplary system 170 may comprise a processor 172, a video processing block 174, memory 178, and a video source 176. The video processing block 174 may comprise an encoder 180. The video source 176 may comprise suitable circuitry, logic, and/or code and may be adapted to communicate raw video stream data to the video processing block 174. The video processing block 174 may comprise suitable circuitry, logic, and/or code and may be adapted to process the raw video data received from the video source 176. For example, the video processing block 174 may be adapted to perform encoding/decoding operations on video data received from the video source 176. In this regard, the video processing block 174 may be implemented as a specialized video processing chip. The encoder 180 may comprise suitable logic, circuitry and/or code that may be adapted to encode the received video data based on a decision by the processor 172.

The processor 172 may comprise suitable circuitry, logic, and/or code and may be adapted to control processing of video information by the video processing block 174, for example. The processor 172 may comprise a system or a host processor. The memory 178 may be adapted to store raw or processed video data, such as video data processed by the video processing block 174. Furthermore, the memory 178 may be utilized to store code that may be executed by the processor 172 in connection with video processing tasks performed by the video processing block 174.

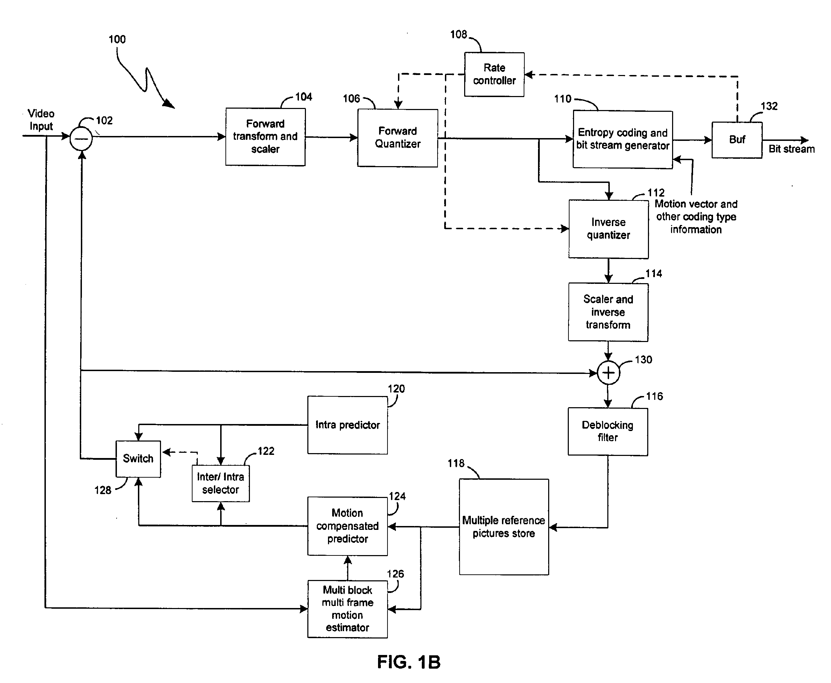

FIG. 1B is a block diagram of an exemplary video encoder that may be utilized in connection with an embodiment of the invention. Referring to FIG. 1 B, there is shown a video encoder 100 that may be utilized for H.264/ MPEG-4 AVC video bitstreams. The video encoder 100 may comprise a forward transform and scaler block 104, a forward quantizer 106, a rate controller 108, an entropy coding and bit stream generator 110, an inverse quantizer 112, a scaler and inverse transform block 114, a summer 130, a subtractor 102, a deblocking filter 116, a multiple reference pictures storage block 118, an intra predictor 120, an inter/intra selector block 122, a motion compensated predictor 124, a multi-block multi-frame motion estimator 126, a switch 128 and a buffer 132.

The forward transform and scaler block 104 may comprise suitable logic, circuitry and/or code that may enable an integer transform of coefficients. For example, in AVC, a 4 x 4 integer transform may be utilized. The transform coding may utilize predictions to construct the residuals. The pixel values in a macroblock (MB) may be predicted either from neighboring pixels in the same picture in case of intra MBs, or from pixels in one or two previously decoded reference pictures in case of inter MBs.

The forward quantizer 106 may comprise suitable logic, circuitry and/or code that may enable scaling and quantization of each sub-block in a bitstream. The scale factor for each element in each sub-block may vary as a function of the quantization parameter associated with macroblock that contains the sub-block. The rate controller 108 may comprise suitable logic, circuitry and/or code that may enable controlling the value of the quantization parameters.

The entropy coding and bitstream generator 110 may comprise suitable logic, circuitry and/or code that may enable transform coefficient coding of quantized coefficients of the transform. The entropy coding and bit stream generator 110 may use a plurality of methods for coding, for example, Exp-Golomb codes, context adaptive variable length coding (CAVLC), and context adaptive binary arithmetic coding (CABAC). The buffer 132 may comprise suitable logic, circuitry and/or code that may enable buffering a resulting bitstream to generate a MPEG-4 AVC compliant bitstream.

The inverse quantizer 112 may comprise suitable logic, circuitry and/or code that may enable scanning and quantizing the transform coefficients generated by the forward quantizer 106. The scaler and inverse transform block 114 may comprise suitable logic, circuitry and/or code that may enable transforming the inverse scanned and inverse quantized transform coefficients.

The deblocking filter 116 may comprise suitable logic, circuitry and/or code that may enable loop filtering on a macroblock after motion compensation and residual coding, depending on whether the macroblock is inter coded or intra coded. The deblocking filter 116 may be enabled to operate on the macroblocks in a raster scan **order.**

The multiple reference pictures store block 118 may comprise suitable logic, circuitry and/or code that may enable storage of the output of the deblocking filter 116. The loop filtering operation may depend on the quantization parameters of the current and neighboring macroblocks, the magnitude of the motion vector, the macroblock coding type, and the values of the pixels to be filtered in both the current and neighboring blocks and macroblocks.

The inter/intra selector block 122 may comprise suitable logic, circuitry and/or code that may enable determining the particular coding mode to be utilized for each macroblock. The output of the inter/intra selector block 122 may be input to a switch 128. The switch 128 may comprise suitable logic and/or circuitry that may enable switching between an intra prediction coding mode and a motion compensated prediction mode based on a received input from the inter/ intra selector block 122.

The intra predictor 120 may comprise suitable logic, circuitry and/or code that may enable predictions of pixel values as linear interpolations of pixels from the adjacent edges of neighboring macroblocks that are decoded before the current macroblock. The interpolations may be directional in nature, with multiple modes, each implying a spatial direction of prediction.

The multi-block multi-frame motion estimator 126 may comprise suitable logic, circuitry and/or code that may enable prediction of an array of pixels, by choosing another similarly sized array of pixels from a previously decoded reference picture.

The motion compensated predictor 124 may comprise suitable logic, circuitry and/or code that may enable translation of the reference array to the position of the current array. For example, in AVC, the array of pixels predicted by the motion compensated predictor 124 may have a plurality of sizes, for example, 16 x 8, 8 x 16, 8 x 8, 8 x 4, 4 x 8, and 4 x 4 pixels.

In operation, each slice may be coded a macroblock at a time and its prediction signal may be subtracted from it. The prediction signal may be generated by selecting a particular prediction signal from various possible candidate modes. The residual difference signal may be coded with a 4 x 4 transform, for example, by the forward transform and scaler block 104 and output to the forward quantizer 106. The forward quantizer 106 may quantize and scale the received signal prior to entropy coding by the entropy coding and bit stream generator 110.

The motion compensated predictor 124 may utilize a plurality of block sizes such as 16 x 16, 16 x 8, 8 x 16, 8 x 8, 8 x 4, 4 x 8, and 4 x 4, for example for motion compensated prediction. The residual signal after prediction may be transform coded by the forward transform and scaler block 104 with 4 x 4 block size, for example. The deblocking filter 116 may be employed in the loop to avoid blocking artifacts. Interlaced video may be coded as frame pictures, field pictures, frame pictures with picture adaptive frame/field (PicAFF), and frame pictures with macroblock adaptive frame/ field (MBAFF). The resulting bit stream may be buffered by the buffer 132 to generate a MPEG-4 AVC compliant bitstream. This bitstream may be raw or formatted for storage or may be delivered over a specific network to a H.264 decoder, for example.

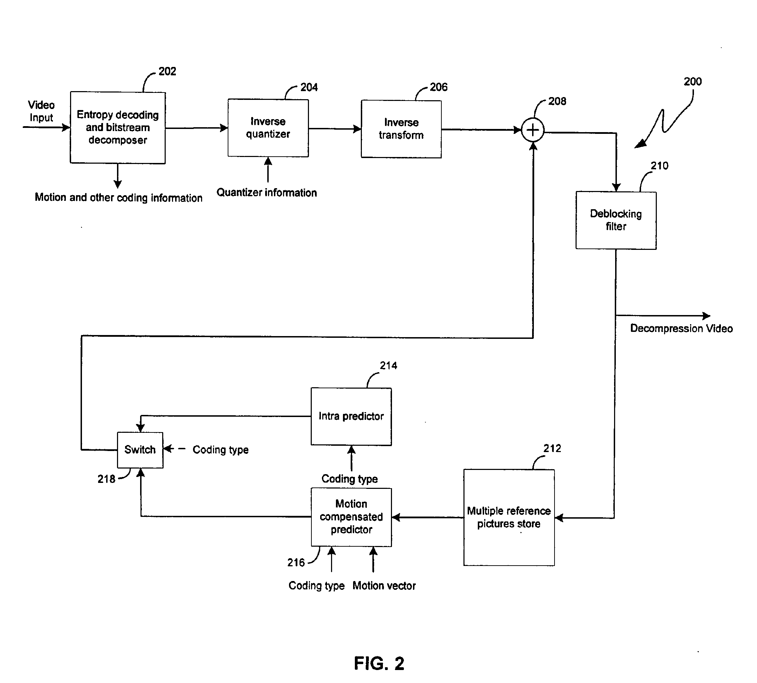

FIG. 2 is a block diagram of an exemplary video decoder that may be utilized in connection with an embodiment of the invention. Referring to FIG. 1B, there is shown a video decoder 200 that may be utilized for H.264/ MPEG-4 AVC video bitstreams. The video decoder 200 may comprise an entropy decoding and bitstream decomposer 202, an inverse quantizer 204, a scaler and inverse transform block 206, a summer 208, an inverse quantizer 210, a multiple reference pictures store block 212, an intra predictor 214, a motion compensated predictor 216, and a switch 218. United States Patent Application Serial No. 10/963,677 (Attorney Docket No. 15748US02) filed October 13, 2004 more fully discloses a video decoder with a deblocker within a decoding loop and is incorporated herein by reference in its entirety.

The entropy decoding and bitstream decomposer 202 may comprise suitable logic, circuitry and/or code that may enable receiving of a video input and generation of a decoded output to the inverse quantizer 204. The entropy decoding and bitstream decomposer 202 may utilize, for example, CABAC or CAVLC decoding algorithms to decode the incoming video input.

The inverse quantizer 204 may comprise suitable logic, circuitry and/or code that may enable scanning and quantizing of the transform coefficients generated by the entropy decoding and bitstream decomposer 202. The inverse transform block 206 may comprise suitable logic, circuitry and/or code that may enable transforming the inverse scanned and inverse quantized transform coefficients.

The deblocking filter 210 may comprise suitable logic, circuitry and/or code that may enable loop filtering on a macroblock after motion compensation and residual coding, depending on whether the macroblock is inter coded or intra coded. The deblocking filter 210 may be enabled to operate on the macroblocks in a raster scan order.

The multiple reference pictures store block 212 may comprise suitable logic, circuitry and/or code that may enable storage of the output of the deblocking filter 210. The loop filtering operation may depend on, for example, the quantization parameters of the current and neighboring macroblocks, the magnitude of the motion vector, the macroblock coding type, and/or the values of the pixels to be filtered in both the current and/or neighboring blocks and macroblocks. The switch 218 may comprise suitable logic and/or circuitry that may enable switching between an intra prediction coding mode and a motion compensated prediction mode.

The intra predictor 214 may comprise suitable logic, circuitry and/or code that may enable predictions of pixel values as linear interpolations of pixels from the adjacent edges of neighboring macroblocks that are decoded before the current macroblock. The interpolations may be directional in nature, with multiple modes, each implying a spatial direction of prediction. The intra predictor 214 may utilize the past pixel samples within the same picture to predict the current pixel. '

The motion compensated predictor 216 may comprise suitable logic, circuitry and/or code that may enable prediction of an array of pixels, by choosing another similarly sized array of pixels from a previously decoded reference picture. The motion compensated predictor 216 may enable translation of the reference array to the position of the current array. For example, in AVC, the array of pixels predicted by the motion compensated predictor 124 may have a plurality of sizes, for example, 16 x 8, 8 x 16, 8 x 8, 8 x 4, 4 x 8, and 4 x 4 pixels. The motion compensated predictor 216 may utilize the pixel samples of the past pictures to predict the pixel of the current picture.

An appropriate prediction signal, for example, intra prediction signal or motion compensated inter prediction signal may be added to the residual signal depending on a macroblock type mode, a reference frame, motion vectors, and decoded pictures stored in the multiple reference pictures store block 212. The reconstructed video frames may be filtered by the deblocking filter 210 prior to being stored for future use for prediction.

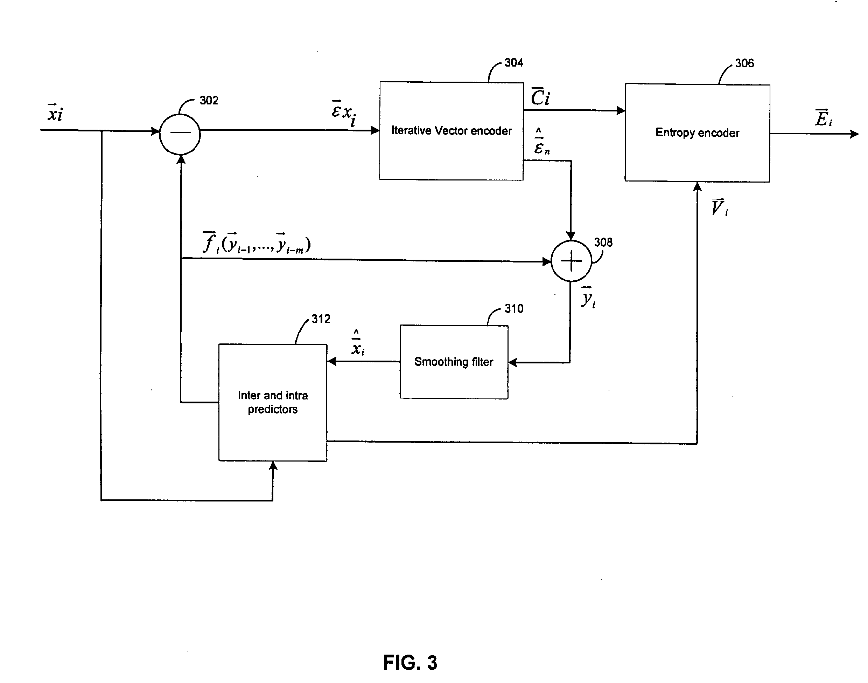

FIG. 3 is a block diagram of an exemplary video compression encoder system, in accordance with an embodiment of the invention. Referring to FIG. 3, there is shown a video compression encoder system 300. The video compression encoder system 300 may comprise a subtractor 302, an iterative vector encoder 304, an entropy encoder 306, a summer 308, a smoothing filter 310, and an inter and intra predictors block 312.

The iterative vector encoder 304 may enable generation of at least one quantized vector for received video data. The iterative vector encoder 304 may enable dynamic modification of a coding rate of at least a portion of the received video data based on the generated at least one quantized vector, during compression of the received video data.

The iterative vector encoder 304 may comprise a forward transform and scaler 104, a forward quantizer 106, an inverse quantizer 112, and a scaler and inverse transform block 114. The inter and intra predictors block 312 may comprise an intra predictor 120, a motion compensated predictor 124, a motion estimator 126, and a multiple reference pictures store block 118.

The iterative vector encoder 304 may enable scaling of at least one generated quantized vector of received video data. The iterative vector encoder 304 may enable adjusting of the coding rate of the received video data during compression by utilizing at least one of: pruned tree structure codes and shortened low-density parity check (LDPC) codes.

The smoothing filter 310 may comprise suitable logic, circuitry and/or code that may enable loop filtering on a macroblock after motion compensation and residual coding, depending on whether the macroblock is inter coded or intra coded. The smoothing filter 310 may be similar to the deblocking filter 116 and may be enabled to operate on the macroblocks in a raster scan order.

The entropy encoder 306 may comprise suitable logic, circuitry and/or code that may enable transform coefficient coding of quantized coefficients of the transform. The entropy encoder 306 may use a plurality of methods for coding, for example, Exp-Golomb codes, context adaptive variable length coding (CAVLC), and context adaptive binary arithmetic coding (CABAC).

The iterative vector encoder 304 may enable dynamic selection of at least one generated quantized vector and transmission of the selected at least one generated quantized vector to a decoder 400 via a compressed bit stream. The iterative vector encoder 304 may enable generation of the compressed bit stream after compression of the received video data. The iterative vector encoder 304 may enable indexing of the generated at least one quantized vector. The iterative vector encoder 304 may enable sorting of the indexed generated at least one quantized vector.

The iterative video encoder 304 may be enabled to perform a plurality of prediction operations. The video compression encoding system 300 may be modeled by the following set of prediction equations:

$$\bar{x}_i = \bar{\varepsilon}_{xi} + \bar{f}_i\left(\bar{y}_{i-1}, \ldots, \bar{y}_{i-m}\right), \tag{1.1}$$

$$\bar{y}_i = \bar{\varepsilon}_{y_i} + \bar{f}_i\left(\bar{y}_{i-1}, \ldots, \bar{y}_{i-m}\right), \qquad (1.2)$$

$$\hat{\bar{x}}_i = \bar{g}_i\left(\bar{y}_i\right), \qquad (1.3)$$

where $\bar{x}_i$ denotes the original pixel vector of the i-th coding block while $\bar{y}_i$ denotes the reconstructed pixel vector of the i-th coding block and $\hat{\bar{x}}_i$ denotes the filtered reconstructed pixel vector. The quantization process may be utilized to generate $\bar{y}_i$. $\bar{f}_i$, $\in F$, which is the prediction function from a set of predictors F for the i-th coding block, where $\bar{\varepsilon}_{xi}$ and $\bar{\varepsilon}_{yi}$ are the prediction and coding error vectors, respectively, and $\bar{g}_i$ designates the function of the smoothing filter 310.

The distortion measure may be defined by the following equation:

$$d\left(\bar{x}_i, \bar{y}_i\right) \stackrel{\Delta}{=} \left\|\bar{x}_i - \bar{y}_i\right\|_r . \qquad (1.4)$$

The distortion measure may be, for example, a squared error distortion for r=2 as illustrated in the following equation:

$$d\left(\bar{x}_i, \bar{y}_i\right) \stackrel{\Delta}{=} \left\|\bar{x}_i - \bar{y}_i\right\|^2 , \qquad (1.5)$$

The distortion measure may be, for example, an absolute error distortion for r=1 as illustrated in the following equation:

$$d\left(\bar{x}_i, \bar{y}_i\right) \stackrel{\Delta}{=} \left\|\bar{x}_i - \bar{y}_i\right\| . \qquad (1.6)$$

From equations (1.1) and (1.2),

$$d\left(\bar{x}_i, \bar{y}_i\right) = d\left(\bar{\varepsilon}_{x_i}, \bar{\varepsilon}_{y_i}\right). \qquad (1.7)$$

The iterative vector encoder 304 may utilize an algorithm, for example, the Viterbi algorithm for the design of scalar or vector quantizers with distortion measures based on a training sequence of data to generate scalar quantizers. The Viterbi algorithm may generate an optimal, or maximum-likelihood solution, by minimizing the probability of vector quantization (VQ) encoding error for a given trellis VQ code, which may increase exponentially with the minimum distance of the trellis VQ code.

In an embodiment of the invention, the iterative vector encoder 304 may utilize a quantizer design with lower complexity than trellises. The iterative vector encoder 304 may achieve optimal compression performance with low encoding complexity by operating on an internal state, until a valid codeword or reproduction vector is reached.

The iterative coding algorithms may be generic algorithms, for example, min-sum and sum-product algorithms, which may also include non-iterative algorithms such as the Viterbi algorithm. The min-sum and sum-product algorithms may be developed as generalized trellis algorithms, where the time axis of the trellis may be replaced by an arbitrary graph, for example, a Tanner graph. When the Tanner graph has cycles, for example, turbo codes and low-density parity check (LDPC) codes, the resulting algorithms may be suboptimal, but with a significant reduction in complexity compared to a cycle-free case.

In another embodiment of the invention, the code words, for example, quantized vectors or reproduction vectors may be analyzed by known vector quantization (VQ) techniques by designing the optimal codes to approach the optimal VQ coding performance.

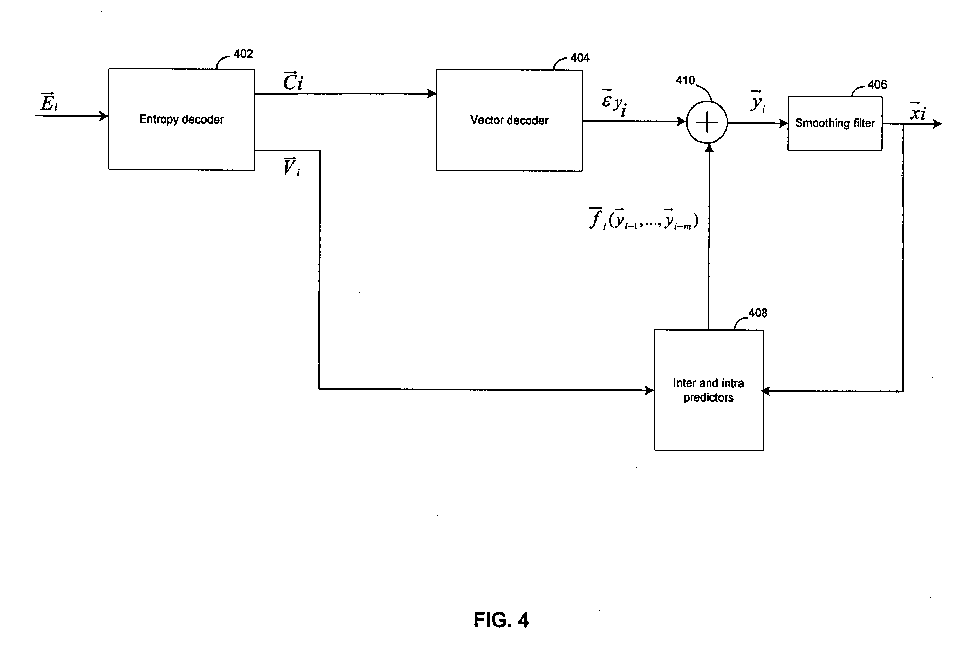

FIG. 4 is a block diagram of an exemplary video compression decoder system, in accordance with an embodiment of the invention. Referring to FIG. 4, there is shown a video compression decoder system 400. The video compression decoder system 400 may comprise a entropy decoder 402, a vector decoder 404, a smoothing filter 406, an inter and intra predictors block 408 and a summer 410.

The vector decoder 404 may comprise the inverse quantizer 204, and the scaler and inverse transform block 206. The smoothing filter 406 may comprise suitable logic, circuitry and/or code that may enable loop filtering on a macroblock after motion compensation and residual coding, depending on whether the macroblock is inter coded or intra coded. The smoothing filter 406 may be similar to the deblocking filter 210 and may be enabled to operate on the macroblocks in a raster scan order. The inter and intra predictors block 408 may comprise an intra predictor 214, a motion compensated predictor 216, and a multiple reference pictures store block 212.

The entropy decoder 402 may enable initialization of the video compression decoder system 400 by utilizing already decoded properties about a slice. The range division variables utilized in the decoding engine may be initialized to known values and the context model variables may be initialized. Each syntax element to be decoded may be expressed in a variable length code at the encoder side and the process of converting a fixed-length code to a variable length code is called binarization. Binarization may be utilized to assign a string of bits to syntax elements with more than two possible values, and to assign shorter codes to more probable values for the syntax element. At the decoder side, a de-binarization process may be applied so that the original fixed-length syntax element may be recovered.

A binarized syntax element may have a string of binary bits and each bit may be called a symbol in CABAC. Each symbol of a syntax element may be decoded individually with a probability model associated with the symbol. In CABAC, a symbol may have several models or contexts associated with it and the model selection may be based on adjacent macroblock properties. After a symbol is decoded, the probability model or context model may be updated based on the decoded value of the symbol. When the same symbol is decoded again using the same context model, the probability values may be different next time and an adaptive model may be generated.

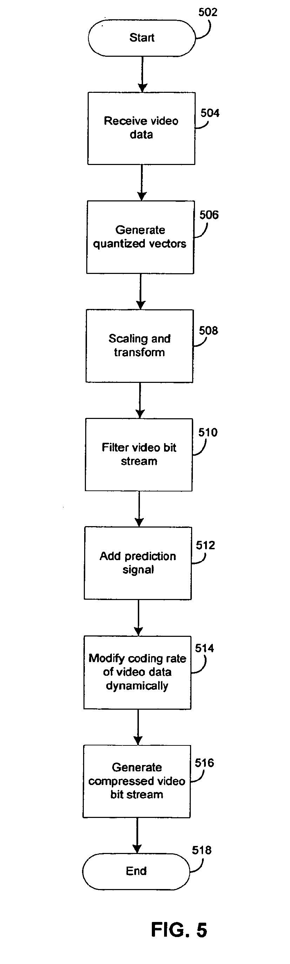

FIG. 5 is a flow chart illustrating exemplary steps for a video compression system with iterative vector encoding, in accordance with an embodiment of the invention. Referring to FIG. 5, exemplary steps may begin at step 502. In step 504, the video encoder system 300 may receive video data. In step 506, the iterative vector encoder 304 may generate quantized vectors for the received video input data. In step 508, the generated quantized vectors may be scaled and transformed utilizing a suitable transform algorithm. In step 510, the smoothing filter 310 may loop filter the macroblocks after motion compensation and residual coding, depending on whether the macroblock is inter coded or intra coded.

In step 512, an appropriate prediction signal, for example, an intra prediction signal or a motion compensated inter prediction signal may be added to the residual signal depending on, for example, a macroblock type mode, a reference frame, motion vectors, and decoded pictures stored in the multiple reference pictures store block 212. In step 514, the coding rate of the received video data may be modified during compression by utilizing at least one of: pruned tree structure codes and shortened low-density parity check (LDPC) codes. In step 516, the compressed video bit stream may be generated. Control then passes to end step 518.

In another embodiment of the invention, multi-rate programmatic codes may be designed to satisfy the requirement of flexible compression ratio for video communication and storage applications by utilizing techniques such as pruned tree-structure codes, or shortened LDPC codes. The codes may be adaptively selected and transmitted from the encoder 300 to the decoder 400 via the compressed bit stream. The entropy encoder 306 and the entropy decoder 402 may be adaptive to the code selection and codeword probability. For example, the order of the codeword index may be resorted based on generated probability tables. The codeword index which maps to the variable length code may be resorted by the iterative vector encoder 304 based on the content change and may be transmitted to the vector decoder 404.

In an embodiment of the invention, the iterative vector encoder 304 may utilize at least one of: the following Graph-based algorithms, such as sum-product algorithm for general graph-based codes, a maximum aposteriori probability (MAP) or Bahl, Cocke, Jelinek, Raviv (BCJR) algorithm for trellis graph-based codes, and message passing algorithm for bipartite graph-based codes.

The iterative vector encoder 304 and vector decoder 404 may be enabled to match the optimal performance of vector quantization algorithms, for example, the generalized Lloyd algorithm and Viterbi algorithm. The iterative vector encoder 304 and vector decoder 404 may be enabled to implement programmatic code rate selection for adaptive coding rates, such as using pruned tree-structure codes or shortened LDPC codes.

In accordance with an embodiment of the invention, a video compression system with iterative encoding algorithm may comprise an encoder, for example, the iterative vector encoder 304 may enable dynamic modification of a coding rate of at least a portion of received video data based on at least one quantized vector, during compression of the received video data. The iterative vector encoder 304 may comprise a forward transform and scaler 104, a forward quantizer 106, an inverse quantizer 112, and a scaler and inverse transform block 114.

The iterative vector encoder 304 may enable scaling of at least one quantized vector of received video data. The iterative vector encoder 304 may enable adjusting of the coding rate of the received video data during compression by utilizing at least one of: pruned tree structure codes and shortened low-density parity check (LDPC) codes.

The smoothing filter 310 may enable loop filtering at least one macroblock of the received video data. The iterative vector encoder 304 may enable dynamic selection of at least one quantized vector and transmission of the selected at least one quantized vector to a decoder 400 via a compressed bit stream. The iterative vector encoder 304 may enable generation of the compressed bit stream after compression of the received video data. The iterative vector encoder 304 may enable indexing of the at least one quantized vector. The iterative vector encoder 304 may also enable sorting of the at least one quantized vector.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for handling video data, the method comprising:

   modifying dynamically, a coding rate of at least a portion of received video data based on at least one quantized vector, during compression of said received video data.

2. The method according to claim 1, further comprising scaling said at least one quantized vector for said received video data.

3. The method according to claim 1, further comprising adjusting, during said compression, said coding rate of said received video data utilizing at least one of:

   pruned tree structure codes and shortened low-density parity check (LDPC) codes.

4. The method according to claim 1, further comprising loop filtering at least one macroblock of said received video data.

5. The method according to claim 1, further comprising:

   dynamically selecting said at least one quantized vector during said compression; and
   transmitting said selected said at least one quantized vector to a decoder via a compressed bit stream.

6. A machine-readable storage having stored thereon, a computer program having at least one code section for handling video data, the at least one code section being executable by a machine for causing the machine to perform steps comprising:

   modifying dynamically, a coding rate of at least a portion of received video data based on at least one quantized vector, during compression of said received video data.

7. The machine-readable storage according to claim 6, further comprising code for scaling said at least one quantized vector for said received video data.

**8.** A system for handling video data, the system comprising:

circuitry that enables dynamic modification of a coding rate of at least a portion of received video data based on at least one quantized vector, during compression of said received video data.

**9.** The system according to claim 8, wherein said circuitry enables scaling of said at least one quantized vector for said received video data.

**10.** The system according to claim 8, wherein said circuitry enables adjusting of said coding rate of said received video data during said compression, utilizing at least one of: pruned tree structure codes and shortened low-density parity check (LDPC) codes.

FIG. 1A

**FIG. 1B**

EP 1 868 388 A2

FIG. 2

**FIG. 3**

EP 1 868 388 A2

FIG. 4

502
Start

504
Receive video
data

506
Generate
quantized vectors

508
Scaling and
transform

510
Filter video bit
stream

512
Add prediction
signal

514
Modify coding rate
of video data
dynamically

516
Generate
compressed video
bit stream

518
End

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 96368004 A
- US 00073104 A

- US 96367704 A